# EUROPÄISCHE PATENTSCHRIFT

(11) **EP 3 847 332 B1**
(45) Veröffentlichungstag und Bekanntmachung des Hinweises auf die Patenterteilung: **01.11.2023**
(21) Anmeldenummer: 19765687.9
(22) Anmeldetag: 05.09.2019
(51) Int. Cl.: E05F 15/44, B60J 10/86, B60J 10/40

(54) **SCHUTZVORRICHTUNG FÜR EINEN TÜRFLÜGEL FÜR EIN FAHRZEUG UND TÜRVORRICHTUNG FÜR EIN FAHRZEUG**
PROTECTION DEVICE FOR A DOOR LEAF FOR A MOTOR VEHICLE, AND DOOR DEVICE FOR A MOTOR VEHICLE
DISPOSITIF DE PROTECTION POUR UN BATTANT DE PORTE POUR UN VÉHICULE ET DISPOSITIF DE PORTE POUR UN VÉHICULE

(30) Priorität: 07.09.2018 DE 102018121924
(43) Veröffentlichungstag der Anmeldung: 14.07.2021
(73) Patentinhaber: Knorr-Bremse Gesellschaft mit beschränkter Haftung, 2340 Mödling (AT)
(72) Erfinder: BRAMAUER, Johann, 3341 Ybbsitz (AT); HIRTENLEHNER, Thomas, 3354 Wolfsbach (AT); SCHAFFER, Helmut, 4841 Ungenach (AT); JETZINGER, Peter, 4470 Enns (AT)
(74) Vertreter: Aurigium Leischner & Luthe
(86) Internationale Anmeldenummer: PCT/EP2019/073682
(87) Internationale Veröffentlichungsnummer: WO 2020/049092

(56) Entgegenhaltungen:
- EP-A1- 3 015 336
- EP-A2- 2 532 820
- WO-A1-2019/057695
- DE-T5-112014 001 393
- DE-U1- 9 406 445
- US-A1- 2016 144 699

## Beschreibung

Die vorliegende Erfindung bezieht sich auf eine Schutzvorrichtung für einen Türflügel für ein Fahrzeug und auf eine Türvorrichtung für ein Fahrzeug.

An einer Tür eines Fahrzeugs kann eine Schutzvorrichtung angeordnet sein, beispielsweise ein Einklemmschutzgummi. Die Schutzvorrichtung kann ein Detektionssystem zum Erkennen eines in zwischen zwei Türflügeln oder zwischen einer Tür und einem Fahrzeugportal eingeklemmten Fremdkörpers umfassen.

DE 11 2014 001 393 T5 offenbart einen Hindernissensor für eine Verschlussklappe eines Fahrzeugs. Zwei Elektroden sind durch einen Luftspalt in einem länglichen nichtleitenden Gehäuse voneinander getrennt. Ein Widerstand zwischen den Elektroden ändert sich, wenn die Elektroden aufgrund eines Zusam-mendrückens des Gehäuses durch ein Hindernis miteinander in Kontakt kommen.

DE 94 06 445 U1 offenbart eine Schutzeinrichtunq für eine Schließkante. Die Schutzeinrichtunq weist ein elastisch verformbares Hohlprofil mit einem als Nase ausgeformten Fühlerabschnitt auf. Jeder genügend große Widerstand bewirkt eine Deformation des Hohlpro-fils, worauf über entsprechende Sensoren ein Schließantrieb stillgelegt oder reversiert wird.

EP 3 01 5 336 A1 offenbart eine Türdichtung für eine Fahrzeugtür.

Vor diesem Hintergrund ist es die Aufgabe der vorliegenden Erfindung eine verbesserte Schutzvorrichtung für einen Türflügel für ein Fahrzeug und eine verbesserte Türvorrichtung für ein Fahrzeug zu schaffen.

Diese Aufgabe wird durch eine Schutzvorrichtung für einen Türflügel für ein Fahrzeug und eine Türvorrichtung für ein Fahrzeug gemäß den Hauptansprüchen gelöst.

Eine Schutzvorrichtung für einen Türflügel für ein Fahrzeug weist einen Grundkörper, einen Stößel und eine Aufhängung auf. Der Grundkörper weist eine Dichtungsseite und eine der Dichtungsseite gegenüberliegende Befestigungsseite zum Befestigen des Grundkörpers an dem Türfügel auf. Zudem umfasst der Grundkörper einen ersten Außenabschnitt und einen zweiten Außenabschnitt. Der erste Außenabschnitt und der zweite Außenabschnitt erstrecken sich zwischen der Dichtungsseite und der Befestigungsseite. Der Stößel ist an der Dichtungsseite angeordnet. Die Aufhängung verbindet den Stößel beweglich mit dem Grundkörper und ist dazu ausgeformt, ansprechend auf eine Krafteinwirkung auf die erste Außenseite eine Ausweichbewegung des Stößels weg von der Befestigungsseite zu bewirken.

Die Schutzvorrichtung kann als Einklemmschutz an einer Schließkante des Türflügels angeordnet werden. Sollte ein Fremkörper bei einem Schließvorgang des Türflügels eingeklemmt werden, so kann der Fremdkörper eine Schaltbewegung des Stößels in

Richtung der Befestigungsseite der Schutzvorrichtung bewirken. Erfindungsgemäß ist die Richtung der Schaltbewegung der Richtung der Ausweichbewegung entgegengerichtet.

Auf diese Weise kann aus einer Bewegung des Stößels auf die Art der die Bewegung bewirkenden Kraft geschlossen werden. Erfindungsgemäß wird dadurch zwischen einer auf die erste Außenseite der Schutzvorrichtung einwirkenden Krafteinwirkung und einer durch einen eingeklemmten Fremdkörper hervorgerufenen Krafteinwirkung unterschieden.

Bei dem Fahrzeug kann es sich beispielsweise um ein Fahrzeug zur Personenbeförderung handeln. Insbesondere kann das Fahrzeug als ein Schienenfahrzeug ausgeführt sein. Die Tür des Fahrzeugs kann beispielsweise als Türsystem mit zwei Türflügeln realisiert sein, oder als einflügliges Türsystem. Die Schutzvorrichtung kann einteilig oder mehrteilig ausgeführt sein. Der Grundkörper, der Strößel und die Aufhängung können beispielsweise aus einem Elastomer ausgeformt sein. Die Schutzvorrichtung kann auch als Fingerschutzgummi bezeichnet werden. Die Schutzvorrichtung umfasst eine Schalteinrichtung zum Detektieren eines eingeklemmten Fremdkörpers. Erfindungsgemäß wird aufgrund der Richtung der Ausweichbewegung verhindert, dass die Schalteinrichtung bei der Krafteinwirkung auf die erste Außenseite fälschlicherweise einen eingeklemmten Fremdkörper sensiert. Im montierten Zustand der Schutzvorrichtung kann die Außenseite des ersten Außenabschnitts an einer Außenseite des Fahrzeugs angeordnet sein, und die Außenseite des zweiten Außenabschnitts kann an einer Innenseite des Fahrzeugs angeordnet sein. Der Stößel kann sich im montierten Zustand der Schutzvorrichtung in Richtung einer x-Achse der Schutzvorrichtung erstrecken. Die x-Achse kann dabei einer Längsachse des Fahrzeugs entsprechen. Die Aufhängung kann flexibel ausgeformt sein. Zudem kann die Aufhängung ausgebildet sein, eine Bewegung des Stößels entlang einer x-Achse und in Richtung einer y-Achse zu ermöglichen, wobei die y-Achse einer Querachse des Fahrzeugs entsprechen kann. Bei der Krafteinwirkung auf die erste Außenseite kann es sich um einen gegen die Schutzvorrichtung drückenden Fremdkörper handeln, der beispielsweise von außerhalb oder innerhalb des Fahrzeugs gegen die Schutzvorrichtung gedrückt wird. Die Aufhängung kann zum Bewirken der Ausweichbewegung elastisch verformbar ausgeführt sein.

Erfindungsgemäß ist die Aufhängung ausgeformt, um eine durch die Krafteinwirkung bewirkte Druckkraft in eine in Erstreckungsrichtung des Stößels wirkende Bewegungskraft umzulenken, um den Stößel zu bewegen. Die Krafteinwirkung kann beispielsweise in Richtung einer y-Achse gerichtet sein, sie kann also beispielsweise in einem rechten Winkeln zu dem Stößel auf die Schutzvorrichtung, einwirken. Vorteilhafterweise ist es durch das Umlenken der Druckkraft in die Bewegungskraft möglich, die Ausweichbewegung des Stößels mechanisch ohne weitere Umlenkelemente zu bewirken, was kostengünstig realisierbar ist.

Zudem können der erste Außenabschnitt und die Aufhängung gemäß einer Ausführungsform ansprechend auf die Krafteinwirkung verformbar sein. Dabei kann der erste Außenabschnitt in Richtung des zweiten Außenabschnitts bewegt und die Aufhängung kann gestaucht werden, um die Ausweichbewegung des Stößels zu bewirken. Die Verformbarkeit des ersten Außenabschnitt und der Aufhängung ist vorteilhaft, um einer Beschädigung der Aufhängung durch die Krafteinwirkung vorzubeugen und die Ausweichbewegung zu ermöglichen.

Gemäß der Erfindung weist die Aufhängung einen ersten Steg auf, der dazu ausgeformt ist, den Stößel mit dem ersten Außenabschnitt zu verbinden.

Außerdem weist die Aufhängung erfindungsgemäß einen zweiten Steg auf, der dazu ausgeformt ist, den Stößel mit dem zweiten Außenabschnitt zu verbinden. Der erste Steg kann beispielsweise direkt mit dem ersten Außenabschnitt verbunden sein, und der zweite Steg kann ebenfalls direkt mit dem zweiten Außenabschnitt verbunden sein oder beispieslweise mit einem Grundkörperabschnitt verbunden sein, der mit dem zweiten Außenabschnitt verbunden ist. Die Ausformung der Aufhängung mit dem ersten Steg und dem zweiten Steg ermöglicht vorteilhafterweise eine stabile Befestigung des Stößels an dem Grundkörper und gleichzeitig die Beweglichkeit des Stößels gegenüber dem Grundkörper in kompakter Bauweise.

Der erste Steg und zusätzlich oder alternativ der zweite Steg kann gemäß einer Ausführungsform eine Krümmung aufweisen. Dabei kann ein mit dem Stößel verbundenes Ende des ersten Stegs und zusätzlich oder alternativ des zweiten Stegs weiter von der Befestigungsseite entfernt sein als ein mit dem Grundkörper verbundenes Ende. Die Krümmung des ersten und zusätzlich oder alternativ des zweiten Stegs ermöglicht die Ausweichbewegung des Stößels weg von der Befestigungsseite mittels einer platzsparenden Aufhängung.

In dem Grundkörper kann gemäß einer Ausführungsform ein Hohlraum ausgeformt sein, der von dem Stößel und der Aufhängung überspannt wird. Durch die Ausweichbewegung des Stößels bei der Krafteinwirkung kann ein Abstand zwischen dem Stößel und einer dem Stößel gegenüberliegenden Rückwand des Hohlraums vergrößert werden. Der Hohlraum ist vorteilhaft, um eine Beweglichkeit des Stößels gegenüber dem Grundkörper in verschiedene Richtungen mittels der Aufhängung zu realisieren. Zudem kann der Hohlraum genutzt werden, um eine Bewegung des Stößels unter Verwendung einer Schalteinrichtung zu erfassen. Zumindest ein Element der Schalteinrichtung kann dabei innerhalb des Hohlraums, an einem Rand des Hohlraums oder in einer Wand des Hohlraums oder des Stößels angeordnet sein.

Erfindungsgemäß ist die Aufhängung dazu ausgebildet, ansprechend auf eine auf ein freies Ende des Stößels einwirkende Fremdkraft eine Schaltbewegung des Stößels in Richtung der Befestigungsseite des Hohlraums zu bewirken. Die auf das freie Ende des Stößels einwirkende Fremdkraft kann beispielsweise durch einen gegen das freie Ende drückenden Fremdkörper handeln. Wenn im montierten Zustand der Schutzvorrichtung ein Fremdkörper zwischen der Schutzvorrichtung und einem Gegenkörper, beispielsweise einem weiteren Türflügel mit oder ohne Schutzvorrichtung, eingeklemmt ist, kann durch die Fremdkraft mittels der Aufhängung die Schaltbewegung des Stößels bewirkt werden. Die Schaltbewegung wird mit einer Schalteinrichtung erkannt, um den eingeklemmten Fremdkörper detektieren zu können. Erfindungsgemäß ist mit der Aufhängung somit sowohl die Ausweichbewegung als auch die Schaltbewegung realisierbar.

Die Schutzvorrichtung umfasst gemäß der Erfindung eine Schalteinrichtung.

Die Schalteinrichtung kann ausgebildet sein, um die Schaltbewegung des Stößels beispielsweise elektrisch oder optisch zu erfassen. Gemäß der Erfindung weist die Schalteinrichtung ein mit dem Stößel verbundenes erstes Schaltelement und ein mit dem Grundkörper verbundenes zweites Schaltelement auf. Das erste und das zweite Schaltelement kontaktieren durch die Schaltbewegung, um einen auf das freie Ende des Stößels einwirkenden Fremdkörper zu detektieren. Vorteilhafterweise ist es somit möglich, die Aufhängung des Stößels und damit die Schutzvorrichtung sowohl zum Detektieren eines eingeklemmten Fremdkörpers als auch zum Vermeiden eines ungewollten Auslösens der Detektion durch die Krafteinwirkung von außen auf die Schutzvorrichtung zu verwenden, um einen möglichst störungsfreien Fahrbetrieb des Fahrzeugs zu ermöglichen.

Der Grundkörper kann gemäß einer Ausführungsform auch zumindest einen Dichtungsabschnitt zum Abdichten des Türflügels aufweisen. Der zumindest eine Dichtungsabschnitt kann an der Dichtungsseite als Fortsatz des ersten Außenabschnitts oder des zweiten Außenabschnitts ausgeformt sein. Die Schutzvorrichtung kann auch zwei Dichtungsabschnitte aufweisen, wobei einer der Dichtungabschnitte als Fortsatz des ersten Außenabschnitts und der andere Dichtungabschnitte als Fortsatz des zweiten Außenabschnitts ausgeformt ist. Der Dichtungsabschnitt kann auch ansprechend auf die Krafteinwirkung verformbar ausgeführt sein. In einem entspannten Zustand der Schutzvorrichtung kann der Dichtungsabschnitt einen Überstand gegenüber dem Stößel aufweisen. Der zumindest eine Dichtungsabschnitt kann ausgebildet sein, bei einem Drücken gegen einen Gegenkörper den Türflügel abzudichten. Zudem kann der Dichtungsabschnitt auch ausgeformt sein, ein Eindringen eines Fremdkörpers zwischen die Schutzvorrichtung und den Gegenkörper zu verhindern.

Außerdem kann der Dichtungsabschnitt gemäß einer Ausführungsform als ein hohles und stauchbares Dichtelement ausgeformt sein. Alternativ kann der Dichtungsabschnitt auch als ein massives Prallelement mit einer Dichtfläche ausgeformt sein. Der Dichtungabschnitt kann auch als Dichtlippe ausgeführt sein. Wenn der Gegenkörper beispielsweise als weitere Schutzvorrichtung ausgeformt ist, kann einem Dichtungselement jeweils gegenüberliegend eine Dichtfläche angeordnet sein. Die Dichtlippe kann beispielsweise der Dichtfläche gegenüberliegend angeordnet sein.

Mit diesem Ansatz wird zudem eine Türvorrichtung für ein Fahrzeug vorgestellt. Die Türvorrichtung weist einen Türflügel und eine Ausführungsform der vorstehend genannten Schutzvorrichtung auf, die mit einer Schließkante des Türflügels verbunden ist. Bei der Türvorrichtung kann es sich um eine einflüglige oder mehrflüglige Tür für ein Fahrzeug oder ein Beiwagen eines Fahrzeugs, beispielsweise einem Waggon eines Schienenfahrzeugs handeln.

Gemäß einer Ausführungsform kann die Türvorrichtung auch einen weiteren Türflügel und eine mit einer Schließkante des weiteren Türflügels verbundene weitere vorstehend genannte Schutzvorrichtung umfassen. Die Türvorrichtung kann ausgeformt sein, bei einem Schließvorgang zum Schließen den Türflügel gegen den weiteren Türflügel zu drücken, dabei können die Schutzvorrichtung und die weitere Schutzvorrichtung den Türflügel und den weiteren Türflügel gegeneinander abdichten. Der Türflügel und der weitere Türflügel können unterschiedlich oder gleich ausgeführte Ausführungsformen der Schutzvorrichtung aufweisen.

Die Türvorrichtung kann gemäß einer Ausführungsform auch einen weiteren Türflügel und einen mit einer Schließkante des weiteren Türflügels verbundenen Gegenkörper aufweisen. Der Gegenkörper kann ebenso wie die genannte Schutzvorrichtung als Einklemmschutz an einer Schließkante des weiteren Türflügels angeordnet sein, jedoch anders als die genannte Schutzvorrichtung ausgeformt sein. Der Gegenkörper kann eine der Schutzvorrichtung zugewandte Gegenkörper-Dichtungsseite und eine Gegenkörper-Befestigungsseite zum Befestigen des Gegenkörpers an dem weiteren Türfügel aufweisen. Zudem kann der Gegenkörper einen ersten Gegenkörper-Außenabschnitt und einen zweiten Gegenkörper-Außenabschnitt umfassen. Der erste Gegenkörper-Außenabschnitt und der zweite Gegenkörper-Außenabschnitt können sich zwischen der Gegenkörper-Dichtungsseite und der Gegenkörper-Befestigungsseite erstrecken. Zwischen dem ersten Gegenkörper-Außenabschnitt und dem zweiten Gegenkörper-Außenabschnitt kann ein Eindringschutzabschnitt angeordnet sein. Der Eindringschutzabschnitt kann dazu ausgeformt sein, einen Zwischenraum zwischen dem Stößel und dem zweiten Außenabschnitt der Schutzvorrichtung teilweise auszufüllen, wenn die Schutzvorrichtung und der Gegegenkörper zusammengeführt werden. Die Türvorrichtung kann ausgeformt sein, bei einem Schließvorgang zum Schließen den Türflügel gegen den weiteren Türflügel zu drücken, dabei können die Schutzvorrichtung und der Gegenkörper den Türflügel und den weiteren Türflügel gegeneinander abdichten. Der Eindringschutzabschnitt kann ausgebildet sein, ein Eindringen eines Fremdkörpers zwischen die Schutzvorrichtung und den Gegenkörper von außen, also von außerhalb oder innerhalb des Fahrzeugs, zu verhindern oder zu erschweren. Dadurch kann vorteilhafterweise ein Einklemmen eines Fremdkörpers nach einem erfolgten Schließvorgang verhindert oder erschwert werden, was vorteilhaft in Bezug auf einen störungsfreien Fahrbetrieb des Fahrzeugs mit der Türvorrichtung ist. Im geschlossenen Zustand der Türvorrichtung kann gemäß einer Ausführungsform ein erster Abstand zwischen dem ersten Außenabschnitt und dem ersten Gegenkörper-Außenabschnitt größer sein als ein zweiter Abstand zwischen dem zweiten Außenabschnitt und dem zweiten Gegenkörper-Außenabschnitt. Dies ermöglicht vorteilhafterweise, dass ein schmaler Fremdkörper, wie beispielsweise ein Kleidungsstück, auf einer Innenseite der Türvorrichtung zwischen der Schutzvorrichtung und dem Gegenkörper, beispielsweise zwischen dem zweiten Außenabschnitt und dem zweiten Gegenkörper-Außenabschnitt, eingeklemmt wird, sodass ein Auslösen einer optionalen Mitschleiferkennung bei einem Versuch des Herausziehens des Fremdkörpers über die zweiten Außenabschnite vermieden wird. Bei einem Versuch des Herausziehens des Fremdkörpers über die ersten Außenabschnite würde die Mitschleiferkennung dagegen auslösen.

Ausführungsbeispiele der Erfindung werden in der nachfolgenden Beschreibung mit Bezug zu den Figuren näher erläutert. Es zeigen:
Fig. 1 eine schematische Darstellung eines Fahrzeugs mit einer Türvorrichtung gemäß einem Ausführungsbeispiel;
Fig. 2 eine schematische Darstellung einer Schutzvorrichtung und eines Gegenkörpers gemäß einem Ausführungsbeispiel;
Fig. 3 eine schematische Darstellung einer Schutzvorrichtung und eines Gegenkörpers gemäß einem Ausführungsbeispiel;
Fig. 4 eine schematische Darstellung einer Schutzvorrichtung und eines Gegenkörpers gemäß einem Ausführungsbeispiel;
Fig. 5 eine schematische Darstellung einer Schutzvorrichtung und eines Gegenkörpers gemäß einem Ausführungsbeispiel; und
Fig. 6 eine schematische Darstellung einer Schutzvorrichtung und eines Gegenkörpers gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

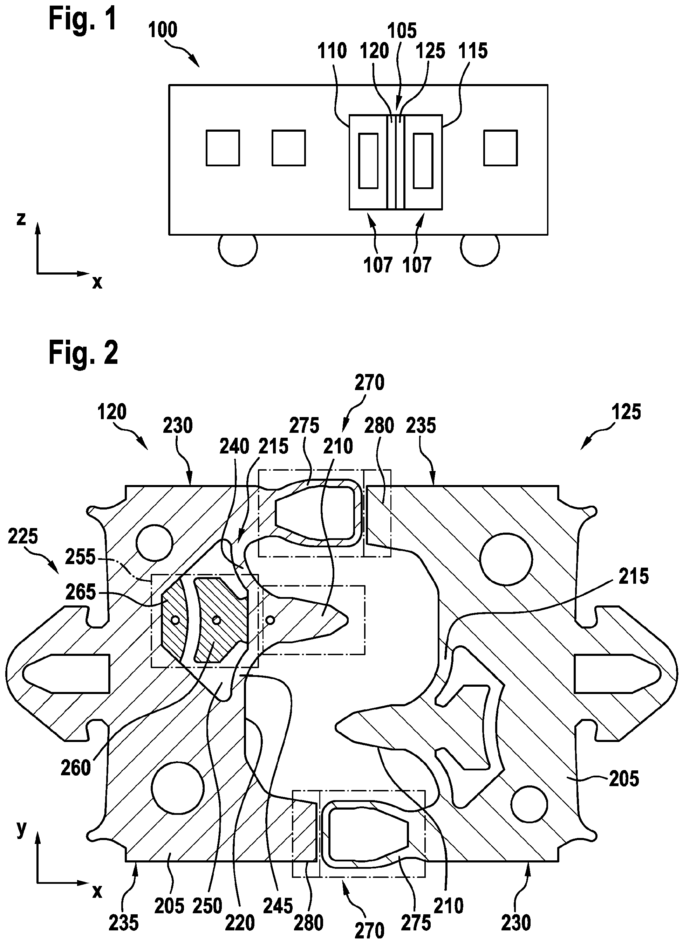

Fig. 1 zeigt eine schematische Darstellung eines Fahrzeugs 100 mit einer Türvorrichtung 105 gemäß einem Ausführungsbeispiel. Als Fahrzeug 100 ist beispielhaft ein Personenbeiwagen eines Schienenfahrzeugs gezeigt. Die Türvorrichtung 105 ist hier beispielhaft als zweiflügelige Tür 107 ausgeführt, und weist einen Türflügel 110 und einen weiteren Türflügel 115 auf. Alternativ kann die Türvorrichtung 105 auch als einflügelige Tür ausgeführt sein und nur den Türflügel 110 aufweisen, der zum Verschließen eines Fahrzeugportals ausgeformt ist.

Gemäß dem gezeigten Ausführungsbeispiel ist an einer Schließkante des Türflügels 110 eine Schutzvorrichtung 120 angeordnet. Entsprechend weist der weitere Türflügel 115 einen mit einer Schließkante des weiteren Türflügels 115 verbundenen Gegenkörper 125 auf. Der Gegenkörper 125 kann entsprechend der Schutzvorrichtung 120 oder anders als die Schutzvorrichtung 120 ausgeformt sein. In dem gezeigten geschlossenen Zustand der Türvorrichtung 105 berühren sich Dichtungsseiten der Schutzvorrichtung 120 und des Gegenkörpers 125.

Die gezeigte x-Achse entspricht einer Längsachse des Fahrzeugs 100 und die z-Achse einer Hochachse des Fahrzeugs 100.

Fig. 2 zeigt eine schematische Darstellung einer Schutzvorrichtung 120 und eines Gegenkörpers 125 gemäß einem Ausführungsbeispiel. Der Gegenkörper 125 ist hier als weitere Schutzvorrichtung ausgeführt. Die hier gezeigte Schutzvorrichtung 120 und der hier gezeigte Gegenkörper sind mit einer Türvorrichtung wie der anhand von Fig. 1 beschriebenen verbindbar und als Fingerschutzgummis für das Fahrzeug einsetzbar. Es ist ein Querschnitt der Schutzvorrichtung 120 und des Gegenkörpers 125 in einem nicht geschlossenen Zustand gezeigt.

Die Schutzvorrichtung 120 umfasst einen Grundkörper 205, einen Stößel 210 und eine Aufhängung 215. Der Grundkörper 205 weist eine Dichtungsseite 220 und eine Befestigungsseite 225 zum Befestigen des Grundkörpers 205 an dem Türfügel auf. Die Dichtungsseite 220 ist der Befestigungsseite 225 gegenüberliegend angeordnet. Die Dichtungsseite 220 ist im montierten Zustand der Schutzvorrichtung 120 dem Gegenkörper 125 zugewandt. Zudem umfasst der Grundkörper 205 einen ersten Außenabschnitt 230 und einen zweiten Außenabschnitt 235. Der erste Außenabschnitt 230 und der zweite Außenabschnitt 235 erstrecken sich zwischen der Dichtungsseite 220 und der Befestigungsseite 225. Die Außenabschnitte 230, 235 formen seitliche Außenwände der Schutzvorrichtung 120 aus. Der Stößel 210 ist an der Dichtungsseite 220 angeordnet. Die Aufhängung 215 verbindet den Stößel 210 beweglich mit dem Grundkörper 205. Zudem ist die Aufhängung 215 dazu ausgeformt, ansprechend auf eine Krafteinwirkung auf die erste Außenseite 230 eine Ausweichbewegung des Stößels 210 weg von der Befestigungsseite 225 zu bewirken.

Der Stößel 210 erstreckt sich entlang einer x-Achse der Schutzvorrichtung 120, und ist mittels der Aufhängung 215 entlang der x-Achse und in Richtung einer y-Achse beweglich. Hier weist der Stößel 210 an einem freien Ende beispielhaft eine spitz zulaufende Verjüngung auf.

Der Grundkörper 205 mit dem Stößel 210 und der Aufhängung 215 ist hier einteilig ausgeführt und aus einem Elastomer ausgeformt. Der Stößel 210 ist in Bezug auf die y-Achse außermittig, hier auf einer Hälfte des Grundkörpers 205 angeordnet, die dem ersten Außenabschnitt 230 näher ist als dem zweiten Außenabschnitt 235.

Auf der Befestigungsseite 225 ist eine Befestigungslasche zum Befestigen der Schutzvorrichtung 120 an dem Türflügel ausgeformt. Die Befestigungslasche und der Stößel 210 sind in Bezug auf die y-Achse versetzt zueinander angeordnet.

In dem Grundkörper 205 ist optional benachbart zu dem ersten Außenabschnitt 230 eine runde Aussparung ausgeformt, und benachbart zu dem zweiten Außenabschnitt 235 ist eine weitere runde Aussparung ausgeformt, mit einem Durchmesser der ungefähr anderthalb Mal so groß ist wie der Durchmesser der Aussparung an dem ersten Außenabschnitt 230.

Gemäß dem hier gezeigten Ausführungsbeispiel weist die Aufhängung 215 einen ersten Steg 240 auf, der dazu ausgeformt ist, den Stößel 210 mit dem ersten Außenabschnitt 230 zu verbinden. Zudem weist die Aufhängung 215 einen zweiten Steg 245 auf, der dazu ausgeformt ist, den Stößel 210 mit dem zweiten Außenabschnitt 235 zu verbinden. Der erste Steg 240 verbindet den Stößel 210 an der Dichtungsseite 220 mit dem ersten Außenabschnitt 230. Gemäß diesem Ausführungsbeispiel weisen die Stege 240, 245 die gleiche Länge auf. Der zweite Steg 245 verwindet den Strößel 210 mit einem an den zweiten Außenabschnitt 235 angrenzenden Grundkörperabschnitt.

Zudem weisen der erste Steg 240 und der zweite Steg 245 gemäß dem hier gezeigten Ausführungsbeispiel eine Krümmung auf. Dabei ist ein mit dem Stößel 210 verbundenes Ende des ersten Stegs 240 weiter von der Befestigungsseite 225 entfernt ist als ein mit dem Grundkörper 205 verbundenes Ende. Auch ein mit dem Stößel 210 verbundenes Ende des zweiten Stegs 245 ist weiter von der Befestigungsseite 225 entfernt als ein mit dem Grundkörper 205 verbundenes Ende. Alternativ zu dem hier gezeigten Ausführungsbeispiel kann auch nur einer der Stege 240, 245 die Krümmung aufweisen. Die Krümmung ist hier bogenförmig ausgeformt.

In dem Grundkörper 205 ist gemäß dem hier gezeigten Ausführungsbeispiel ein Hohlraum 250 ausgeformt. Der Hohlraum 250 wird von dem Stößel 210 und der Aufhängung 215 überspannt. Eine dem Stößel 210 gegenüberliegende Rückwand des Hohlraums 250 weist hier eine Länge auf, die einem Drittel oder ein Viertel einer Länge des Hohlraums 250 auf der an den Stößel 210 angrenzenden Seite des Hohlraums 250 entspricht. Seitenwände des Hohlraums 250 verlaufen in Richtung der Rückwand schräg zulaufend, wodurch der Hohlraum wannenförmig ausgeformt ist. Ein Abstand zwischen dem Stößel 210 und der dem Stößel 210 gegenüberliegenden Rückwand des Hohlraums 250 wird durch die Ausweichbewegung des Stößels 210 vergrößert. Der Grundkörperabschnitt, mit dem der zweite Steg 245 verbunden ist, ist zwischen dem Hohlraum 250 und dem zweiten Außenabschnitt 235 angeordnet.

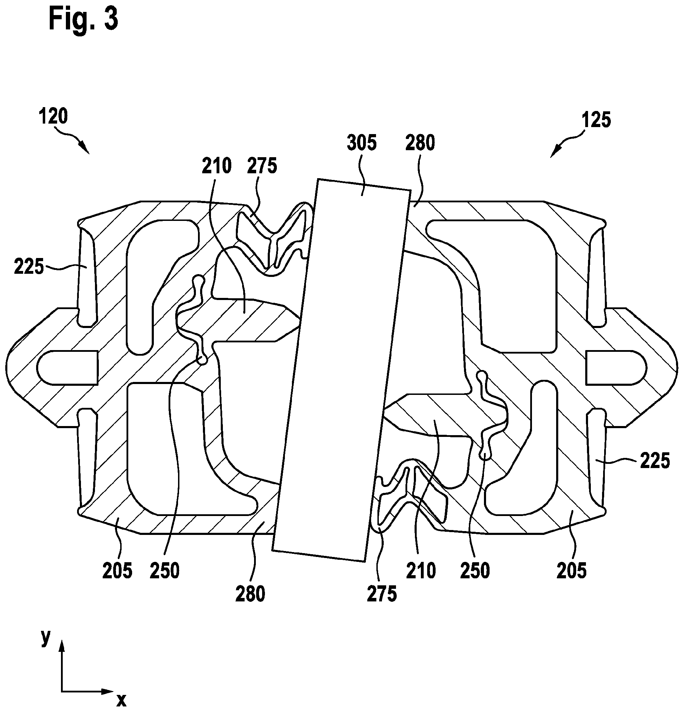

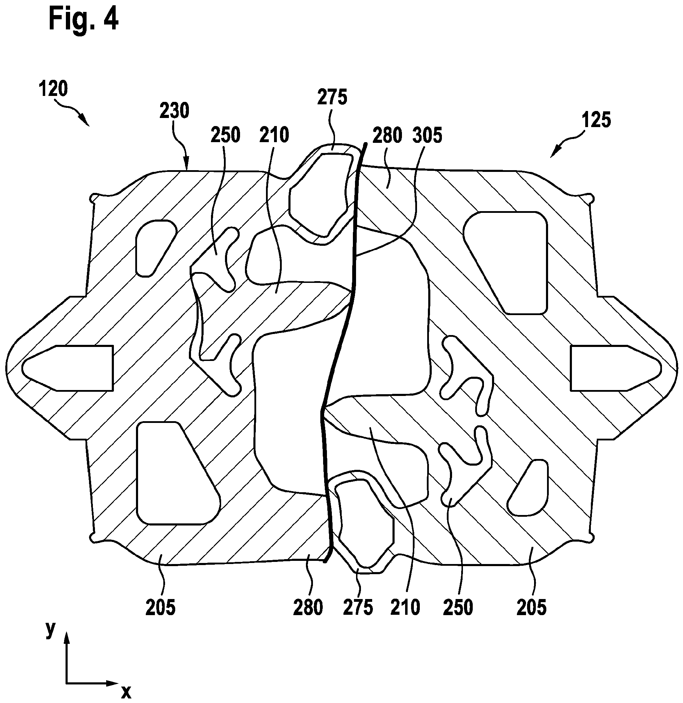

Die Aufhängung 215 ist gemäß dem hier gezeigten Ausführungsbeispiel dazu ausgebildet, ansprechend auf eine auf ein freies Ende des Stößels 210 einwirkende Fremdkraft eine Schaltbewegung des Stößels 210 in Richtung der Befestigungsseite 225 zu bewirken. Gemäß dem hier gezeigten Ausführungsbeispiel wird der Stößel 210 durch die Schaltbewegung in den Hohlraum 250 hinein gedrückt. Die Schaltbewegung kann im Wesentlichen in entgegengesetzter Richtung der Ausweichbewegung verlaufen. Die Fremdkraft kann beispielsweise durch einen zwischen der Schutzvorrichtung 120 und dem Gegenkörper 125 eingeklemmten Fremdkörper bewirkt werden, wie anhand der nachfolgenden Figuren 3 und 4 gezeigt.

Die Schutzvorrichtung 120 umfasst gemäß dem hier gezeigten Ausführungsbeispiel zudem eine Schalteinrichtung 255. Die Schalteinrichtung 255 weist ein mit dem Stößel 210 verbundenes erstes Schaltelement 260 und ein mit dem Grundkörper 205 verbundenes zweites Schaltelement 265 auf. Das erste Schaltelement 260 stellt eine in den Hohlraum 250 hineinragende Verlängerung des Stößels 210 dar. Das zweite Schaltelement 265 ist an der Rückwand des Hohlraums 250 angeordnet oder als Abschitt der Rückwand ausgeführt. Im entspannten Zustand der Schutzvorrichtung 120 befindet sich ein Spalt zwischen den Schaltelementen 260, 265. Der Spalt wird durch die Ausweichbewegung des Stößels 210 vergrößert und durch die Schaltbewegung des Stößels 210 verringert.

Das erste Schaltelement 260 wird durch die Schaltbewegung des Stößels 210 in Richtung des zweiten Schaltelements 265 bewegt, bis die beiden Schaltelemente 260, 265 einander kontaktieren. Die hier gezeigte Schutzvorrichtung 120 kann entsprechend auch als integrierter Einklemmschutz oder als Einklemmerkennung bezeichnet werden. Das erste Schaltelement 260 und das zweite Schaltelement 265 sind hier beispielhaft aus einem elektrisch leitfähigem Material, beispielsweise einem intrinsisch leitfähigem Polymer, ausgeformt. Die Schalteinrichtung 255 in Verbindung mit dem Stößel 210 kann auch als Detektionssystem zum Ertasten und Erkennen eines eingeklemmten Fremdkörpers bezeichnet werden. Wenn zwischen der Schutzvorrichtung 120 und dem Gegenkörper 125 mittels des Stößels 210 ein eingeklemmter Fremdkörper ertastet wird, werden die Einklemmkräfte mittels der Schaltbewegung an die Schalteinrichtung 255 weitergegeben. Durch die Einklemmkräfte wird ein Kontakt zwischen dem ersten Schaltelement 260 und dem zweiten Schaltelement 265 geschlossen. Dies hat zur Folge, dass ein Stromkreis geschlossen wird, was wiederum von einer Auswerteeinheit detektiert werden kann.

Zusätzlich oder alternativ zu den gezeigten Schaltelementen 260 kann die Schalteinrichtung 255 andere Sensorelemente aufweisen, um die Schaltbewegung des Stößels 210 beispielsweise kapazitiv, induktiv oder optisch zu erfassen.

Der Grundkörper 205 weist zudem gemäß einem Ausführungsbeispiel zumindest einen Dichtungsabschnitt 270 zum Abdichten des Türflügels gegenüber dem Gegenkörper auf auf. Gemäß dem hier gezeigten Ausführungsbeispiel weist der Grundkörper zwei Dichtungsabschnitte 270 auf, die an der Dichtungsseite 220 des Grundkörpers 205 jeweils als Fortsatz des ersten Außenabschnitts 230 und des zweiten Außenabschnitts 235 ausgeformt sind.

Der an dem ersten Außenabschnitt 230 angeordnete Dichtungsabschnitt 270 ist gemäß dem hier gezeigten Ausführungsbeispiel als ein hohles und stauchbares Dichtelement 275 ausgeformt.

In dem hier gezeigten entspannten Zustand der Schutzvorrichtung 120 weist das Dichtelement 275 gegenüber dem Stößel 210 einen Überstand in x-Richtung auf. Wenn die Schutzvorrichtung 120 zum Schließen der Tür und zum Abdichten des Türflügels gegen den Gegenkörper 125, hier die weitere Schutzvorrichtung, gedrückt wird, wird das Dichtelement 275 gestaucht, wie anhand der nachfolgenden Figuren 3 und 4 gezeigt, wodurch der Stößel 210 einen Überstand gegenüber dem Dichtelement 275 in x-Richtung aufweist.

Das Dichtelement 275 ist als schmaler mit dem Grundkörper 205 an einem Ende verbundener Bügel ausgeformt und weist eine nahezu rechteckige Form auf, die sich in Richtung des ersten Außenabschnitts 230 verjüngt.

Der an dem zweiten Außenabschnitt 235 angeordnete Dichtungsabschnitt 270 ist gemäß dem hier gezeigten Ausführungsbeispiel als ein massives Prallelement 280 mit einer Dichtfläche ausgeformt. Das Prallelement 280 ähnelt in seiner Breite der Breite des Dichtelements 275, weist jedoch nur einen Bruchteil einer Länge des Dichtelements 275 auf, beispielsweise ein Viertel oder ein Fünftel der Länge des Dichtelements 275. In dem hier gezeigten entspannten Zustand der Schutzvorrichtung 120 weist der Stößel 210 gegenüber dem Prallelement 280 einen Überstand in x-Richtung auf.

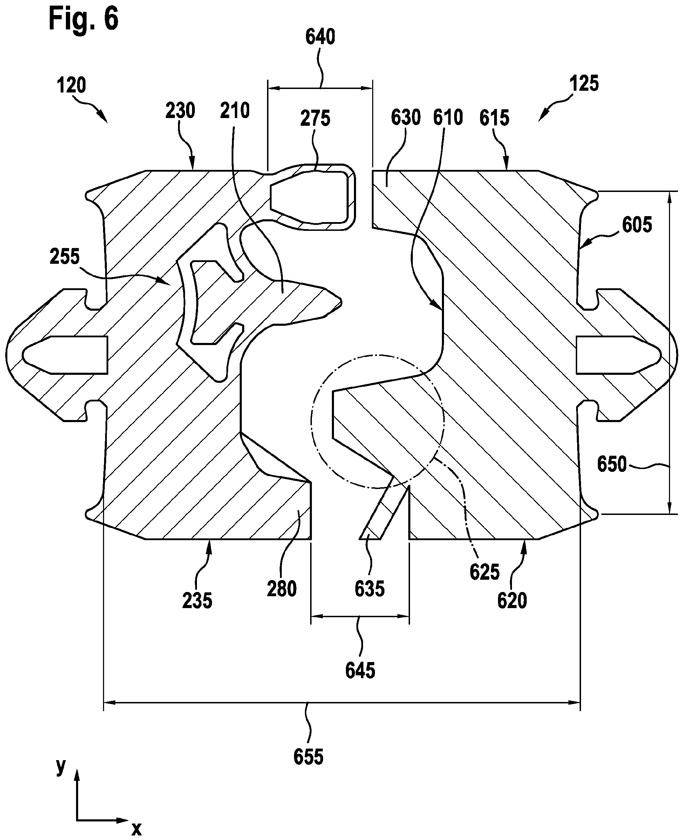

Zumindest einer der Dichtungsabschnitte 270 kann alternativ zu den hier gezeigten Ausformungen auch als Dichtlippe ausgeführt sein, wie es beispielsweise in Fig. 6 gezeigt ist.

Der Gegenkörper 125 als weitere Schutzvorrichtung ist hier identisch wie die Schutzvorrichtung 120 ausgeformt, mit der Ausnahme, dass der Gegenkörper 125 nicht die Schalteinrichtung 255 umfasst. Die Ausformung des Grundkörpers 205, des Stößels 210 und der Aufhängung 215 entspricht aber dem hier beschriebenen Ausführungsbeispiel der Schutzvorrichtung 120. Die weitere Schutzvorrichtung ist gegenüber der Schutzvorrichtung 120 um 180 Grad gedreht angeordnet, sodass die Stößel 210 einander versetzt gegenüberliegen, und in einem geschlossenen Zustand der erste Außenabschnitt 230 der Schutzvorrichtung 120 an den zweiten Außenabschnitt 235 des Gegenkörpers 125 anliegt, und der zweite Außenabschnitt 235 der Schutzvorrichtung 120 an den ersten Außenabschnitt 230 des Gegenkörpers 125 anliegt. Dadurch liegt je eines der Dichtelemente 275 einer der Prallelemente 280 gegenüber. Im montierten Zustand der Schutzvorrichtung 120 und des Gegenkörpers 125 an gegenüberliegenden Türflügeln werden die Dichtabschnitte 270 bei einem Türschließvorgang gegeneinander gedrückt. Dabei wird das je eine Dichtelement 275 gegen die je eine Prallelement 280 gedrückt, um eine Dichtheit zu erreichen. Die Stößel 210 stehen dabei in keinem Kontakt zu dem jeweils gegenüberliegenden Fingerschutzgummi, der Schutzvorrichtung 120 beziehungsweise dem Gegenkörper 125. Es ergeben sich somit keine Einklemmkräfte und daher auch keine Detektierung.

Die hier gezeigte Schutzvorrichtung 120 und der hier gezeigte Gegenkörper 125 sind für eine zweiflüglige Türvorrichtung wie die in Fig. 1 gezeigte verwendbar. Dazu kann eine Vorderkante jeder der beiden Türflügel mit einem Fingerschutzgummi in Form der Schutzvorrichtung 120 oder der weiteren Schutzvorrichtung ausgerüstet sein. Zumindest einer der beiden Türflügel weist dabei die Schutzvorrichtung 120 mit der Schalteinrichtung 255 auf, die auch als aktiver Fingerschutzgummi bezeichnet werden kann. Der zweite Türflügel kann entweder ebenfalls einen aktiven Fingerschutzgummi aufweisen, oder kein Detektionssystem zum Erkennen eines eingeklemmten Fremdkörpers enthalten, wie der hier gezeigte Gegenkörper 125 in Form der weiteren Schutzvorrichtung ohne Schalteinrichtung. Dieser Gegenkörper 125 ohne Schalteinrichtung 155 kann auch als passiver Fingerschutzgummi bezeichnet werden.

Bei einem einflügeligen Türsystem kann einer der beiden Fingerschutzgummis, also entweder die Schutzvorrichtung 120 oder der Gegenkörper 125 am Fahrzeugportal befestigt sein, wobei wiederum die Möglichkeit besteht beide beide Seiten als als aktive Fingerschutzgummis auszustatten.

**Fig. 3** zeigt eine schematische Darstellung einer Schutzvorrichtung 120 und eines Gegenkörpers 125 gemäß einem Ausführungsbeispiel. Die Schutzvorrichtung 120 und der Gegenkörper 125, der auch hier als weitere Schutzvorrichtung ausgeführt ist, ähneln den anhand von Fig. 2 beschriebenen Ausführungsbeispielen. Es ist ein Querschnitt der Schutzvorrichtung 120 und des Gegenkörpers 125 bei einem Schließvorgang der Tür gezeigt. Zwischen der Schutzvorrichtung 120 und dem Gegenkörper 125 ist beispielhaft ein Fremdkörper 305 eingeklemmt. Der Fremdkörper 305 verhindert einen Kontakt zwischen dem Dichtelement 275 der Schutzvorrichtung 120 und der Dichtfläche 280 des Gegenkörpers 125, sowie zwischen der Dichtfläche 280 der Schutzvorrichtung 120 und dem Dichtelement 275 des Gegenkörpers 125. Zudem berühren die freien Enden der Stößel 210 jeweils den Fremdkörper 305, wodurch eine Detektion des Fremdkörpers 305 ermöglicht wird. Wenn sich während des Schließvorganges der Türflügel ein hinreichend großer Fremdkörper 305 zwischen den beiden Fingerschutzgummis, der Schutzvorrichtung 120 und dem Gegenkörper 125 befindet, erfolgt ein Kontakt zwischen zumindest einem Stößel 210 und dem Fremdkörper 305, bevor die Geschlossen-Endlage der Türflügel erreicht ist. Ein Teil der Schließkraft wird dabei in den Stössel 210 geleitet, was eine Detektierung zur Folge hat. Dabei wird der Stößel 210 mittels der Aufhängung 215 in Richtung der Befestigungsseite 225 bewegt.

In dem Grundkörper 205 sind hier außer dem Hohlraum 250 und einem in der Befestigungslasche ausgeformten Aussparung beispielhaft zwei Grundkörper-Hohlräume ausgeformt, die sich je über einen Großteil der halben Länge des Grundkörpers 205 erstrecken. Das Dichtelement 275 ist hier jeweils als stauchbares Bügelelement mit einem Mittelsteg zwischen zwei Höhlräumen ausgeformt. Der Gegenkörper 125 als weitere Schutzvorrichtung ist auch hier identisch wie die Schutzvorrichtung 120 ausgeformt, und gegenüber der Schutzvorrichtung 120 um 180 Grad gedreht angeordnet.

**Fig. 4** zeigt eine schematische Darstellung einer Schutzvorrichtung 120 und eines Gegenkörpers 125 gemäß einem Ausführungsbeispiel. Ähnlich wie in Fig. 3 ist auch hier ein Querschnitt durch die Schutzvorrichtung 120 und den Gegenkörper 125 in Form einer weiteren zu der Schutzvorrichtung 120 um 180 Grad gedrehten Schutzvorrichtung gezeigt. Es ist ein Zustand der Schutzvorrichtung 120 und des Gegenkörpers 125 gezeigt, der einem Zustand bei einer geschlossenen Tür, mit der Schutzvorrichtung 120 an einem Türflügel und dem Gegenkörper 125 an einem anderen Türflügel oder Fahrzeugportal, entspricht. Dies ist durch die Verformung der beiden Dichtelemente 275 gezeigt, die jeweils gegen die gegenüberliegenden Dichtflächen 280 gedrückt und dadurch gestaucht werden. Die in den Grundkörpern 205 ausgeformten Grundkörper-Hohlräume sind hier kleiner ausgeführt als in dem in Fig. 3 gezeigten Ausführungsbeipiel.

Wie in Fig. 2 gezeigt weist die Schutzvorrichtung 120 hier eine Schalteinrichtung auf. Der Stößel 210 des Gegenkörpers 125 weist hier keine Schalteinrichtung auf, sondern ist mittels eines kleinen Verbindungsstegs mit der Rückwand des Hohlraums 250 verbunden. Der Verbindungssteg verläuft in der Erstreckungsrichtung des Stößels 210. Der Fremdkörper 305 ist hier als schmaler Gegenstand ausgeführt. Wenn ein schmaler Gegenstand, der zu klein für eine direkte Detektierung beim Tür-Schließvorgang ist, wie beispielsweise ein Kleidungsstücke oder eine schmale Hundeleine, als Fremdkörper 305 zwischen der Schutzvorrichtung 120 und dem Gegenkörper 125 eingeklemmt wird, so erfolgt die Detektion beim Versuch, diesen schmalen Fremdkörper 305 bei geschlossener Tür herauszuziehen. Dabei wird der Stößel 210 leicht in Richtung der y-Achse bewegt, wie hier anhand der Position der Stößel 210 gezeigt, die leicht in Richtung des ersten Außenabschnitts 230 der Schutzvorrichtung 120 geneigt sind. Durch die Bewegung des Herausziehens wird eine seitliche Kraft in den Stößel 210 eingeleitet. Dies ruft eine Verdrehung des Stößels 210 hervor, die wiederum einen Schaltkontakt schließt und somit die Detektion auslöst.

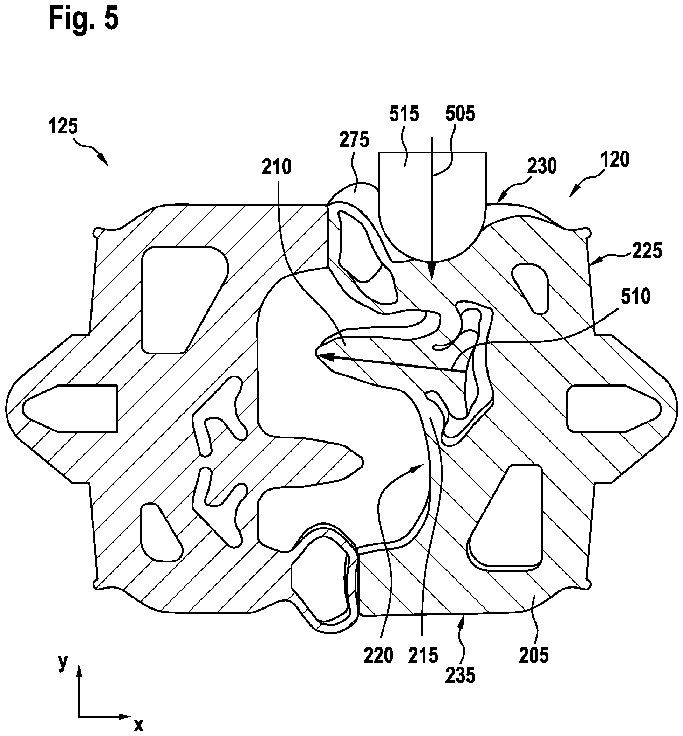

**Fig. 5** zeigt eine schematische Darstellung einer Schutzvorrichtung 120 und eines Gegenkörpers 125 gemäß einem Ausführungsbeispiel. Gezeigt ist ein Querschnitt durch den Gegenkörper 125 und die zum Gegenkörper 125 um 180 Grad gedrehte Schutzvorrichtung 120. Die Ausformung und Ausführung der Schutzvorrichtung 120 und des Gegenkörpers entsprechen dem anhand von Fig. 4 beschriebenen Ausführungsbeispiel, wobei die hier gezeigte Ansicht gegenüber Fig. 4 spiegelverkehrt ist. Der Gegenkörper 125 und die Schutzvorrichtung 120 sind auch hier im gegeneinander gedrückten Zustand, der einer geschlossenen Tür entspricht, gezeigt.

In dem hier gezeigten Ausführungsbeispiel wird durch eine Krafteinwirkung 505 auf den ersten Außenabschnitt 230 der Schutzvorrichtung 120 die Ausweichbewegung 510 des Stößels 210 weg von der Befestigungsseite 225 bewirkt. Die Krafteinwirkung 505 ist hier in Richtung einer y-Achse gerichtet, sie wirkt hier beispielhaft in einem rechten Winkeln zu dem Stößel 210 auf die Schutzvorrichtung 120 ein. Die Krafteinwirkung 505 wird durch einen von außen auf die Schutzvorrichtung 120 einwirkenden Fremdkörper 515 bewirkt.

Gemäß dem hier gezeigten Ausführungsbeispiel ist die Aufhängung 215 ausgeformt, um eine durch die Krafteinwirkung 505 bewirkte Druckkraft in eine in Erstreckungsrichtung des Stößels 210 wirkende Bewegungskraft umzulenken, um den Stößel 210 zu bewegen, wodurch die Ausweichbewegung 510 bewirkt wird. Das Umlenken erfolgt mechanisch durch eine hier gezeigte Verformung der Schutzvorrichtung 120.

Der erste Außenabschnitt 230 und die Aufhängung 215 sind gemäß dem hier gezeigten Ausführungsbeispiel ansprechend auf die Krafteinwirkung 505 verformbar. Dabei wird der erste Außenabschnitt 230 in Richtung der zweiten Außenabschnitt 235 bewegt und die Aufhängung 215 wird gestaucht, um die Ausweichbewegung 510 des Stößels 210 zu bewirken. Hier wird beispielhaft der erste Steg der Aufhängung 215 gestaucht, wodurch der Stößel 210 von der Befestigungsseite weg gedrückt wird. Weitere Abschnitte des Grundkörpers 205, beispielsweise im Bereich der Befestigungsseite 225 und des zweiten Außenabschnitts 235 sowie ein Bereich der Dichtungsseite 220 zwischen dem Stößel 210 und dem zweiten Außenabschnitt 235 bleiben unverformt.

Das als Fortsatz des ersten Außenabschnitts 230 ausgeformte Dichtelement 275 wird dabei ebenfallts verformt, wodurch ein weiterer Anteil der durch die Krafteinwirkung 505 bewirkte Druckkraft umgelenkt wird. Das hier gezeigte "Wegklappen" des Stößels 210 bei einer Penetration der Schutzvorrichtung 120 durch den Fremdkörper 505 von der Seite bei geschlossener Tür ist ausgeformt, eine ungewollte Detektion des Fremdkörpers 505 durch ein Kontaktieren der Schalteinrichtung bei der Schaltbewegung des Stößels 210 zu verhindern. Die ungewollte Detektion, also eine Detektion, obwohl keine sicherheitskritische Situation vorliegt, wird hier vorteilhafterweise nicht ausgelöst, obwohl der Fremdkörper 505 gegen von innerhalb oder außerhalb des Fahrzeuges gegen die Schutzvorrichtung 120 gedrückt wird. Dies ist für einen ungestörten Fahrbetrieb eines mit der Schutzvorrichtung 120 ausgestatteten Fahrzeugs vorteilhaft. Die hier gezeigte Verformung des ersten Außenabschnitts 230 und der Aufhängung 215 und die Ausweichbewegung 510 verhindert dabei die ungewollte Detektion. Eine Detektion erfolgt hier beispielsweise erst nach der Krafteinwirkung 505 mit einer Kraft von z.B. >60N bei einem Fremdkörper 505 mit einem Durchmesser von 10mm. Im Bereich des Dichtelements 275 ist die Auslösetoleranz geringer, da hierbei je nach Toleranzlage, also je nach Pressungstoleranz, auch bei geringerer Kraft, beziehungsweise wenn ein kleinerer Gegenstand zwischen das Dichtelement 275 und das gegenüberliegende Prallelement 280 geschoben wird, eine Detektion erfolgt.

**Fig. 6** zeigt eine schematische Darstellung einer Schutzvorrichtung 120 und eines Gegenkörpers 125 gemäß einem Ausführungsbeispiel. Die hier gezeigte Schutzvorrichtung 120 ähnelt oder entspricht der anhand der vorhergehenden Figuren beschriebenen Schutzvorrichtung. Der hier gezeigte Gegenkörper 125 ist jedoch nicht als weitere Schutzvorrichtung ausgeführt, sondern weist eine Ausformung auf, die als zusätzlicher Eindringschutz des von außen einwirkenden Fremdkörpers ausgeführt ist. Es ist ein Querschnitt durch die Schutzvorrichtung 120 und den Gegenkörper 125 gezeigt, die hier nicht gegeneinander gedrückt sind und somit einen nicht vollständig geschlossenen Zustand einer Türvorrichtung mit der Schutzvorrichtung 120 und dem Gegenkörper 125 zeigen.

Der hier gezeigte Gegenkörper 125 ist mit der Schließkante eines der Türflügel der Türvorrichtung wie sie anhand von Fig. 1 beschrieben ist verbindbar. Gemäß dem hier gezeigten Ausführungsbeispiel weist der Gegenkörper 125 eine Gegenkörper-Befestigungsseite 605 zum Befestigen des Gegenkörpers 125 an einem der Türflügel auf, und eine der Befestigungsseite gegenüberliegende Gegenkörper-Dichtungsseite 610, die der Schutzvorrichtung 120 zugewandt ist. Außerdem umfasst der Gegenkörper 125 einen ersten Gegenkörper-Außenabschnitt 615 und einen zweiten Gegenkörper-Außenabschnitt 620. Der erste Gegenkörper-Außenabschnitt 615 und der zweite Gegenkörper-Außenabschnitt 620 erstrecken sich zwischen der Gegenkörper-Dichtungsseite 610 und der Gegenkörper-Befestigungsseite 605. Zwischen dem ersten Gegenkörper-Außenabschnitt 615 und dem zweiten Gegenkörper-Außenabschnitt 620 ist ein Eindringschutzabschnitt 625 angeordnet. Der Eindringschutzabschnitt 625 ist dazu ausgeformt, einen Zwischenraum zwischen dem Stößel 210 und dem zweiten Außenabschnitt 235 der Schutzvorrichtung 120 teilweise auszufüllen. Der Eindringschutzabschnitt 625 ist anstelle eines Stößels vorgesehen.

Der Eindringschutzabschnitt 625 grenzt an den zweiten Gegenkörper-Außenabschnitt 620 und erstreckt sich teilweise entlang der Gegenkörper-Dichtungsseite 610, hier beispielhaft über ein Drittel der Länge der Gegenkörper-Dichtungsseite 610. In Richtung des Gegenkörper-Außenabschnitts 620 ist der Eindringschutzabschnitt 625 abgeschrägt. Zudem weist der Eindringschutzabschnitt 625 ein flaches freie Ende auf. Der Eindringschutzabschnitt 625 ist dazu ausgebildet, ein Eindringen eines Fremdkörpers von außen zwischen die Schutzvorrichtung 120 und den Gegenkörper 125 zu verhindern.

In der Schutzvorrichtung 120 ist die Schalteinrichtung 255 mit dem Stößel 210 realisiert, und im montierten Zustand ist schräg gegenüberliegend an der Gegenkörper-Dichtungsseite 610 der Eindringschutzabschnitt 625 angeordnet. In geschlossenem Zustand der Türvorrichtung, wenn die Schutzvorrichtung 120 und der Gegenkörper 125 gegeneinander gedrückt sind, wird mittels des Eindringschutzabschnitts 625 das Eindringen zumindest einseitig verhindert. Auf diese Weise wird das Eindringen des Fremdkörpers von der Innenseite oder von der Außenseite des Fahrzeugs erschwert oder verhindert, was einer ungewollten Detektion des Fremdkörpers vorbeugt.

Zum Abdichten des Gegenkörpers 125 gegenüber der Schutzvorrichtung 120 weist die Schutzvorrichtung 120 gemäß dem hier gezeigten Ausführungsbeispiel als Fortsatz des ersten Außenabschnitts 230 das Dichtelement 275 und als Fortsatz des zweiten Außenabschnitts 235 das Prallelement 280 auf. Der Gegenkörper 125 weist als Fortsatz des ersten Gegenkörper-Außenabschnitts 615 ein Gegenkörper- Prallelement 630, und als Fortsatz des zweiten Gegenkörper-Außenabschnitts 620 eine Gegenkörper-Dichtlippe 635 auf. Die Dichtlippe 635 weist ein mit dem Eindringschutzabschnitt 625 verbundenes Ende und ein freies Ende auf, und steht von der Gegenkörper-Dichtungsseite 610 schräg ab. Die hier gezeigte Dichtlippe 635 ist auch zusätzlich oder alternativ zum Dichtelement 275 und zur Dichtfläche 280 auf Seiten der Schutzvorrichtung realisierbar.

Gemäß einer Ausführungsform ist im geschlossenen Zustand der Türvorrichtung, also bei einem Gegeneinanderdrücken der Schutzvorrichtung 120 und des Gegenkörpers 125 ein erster Abstand 640 zwischen dem ersten Außenabschnitt 230 und dem ersten Gegenkörper-Außenabschnitt 615 größer ist als ein zweiter Abstand 645 zwischen dem zweiten Außenabschnitt 235 und dem zweiten Gegenkörper-Außenabschnitt 620. Dies ist vorteilhaft, um eine Betätigungskraft der Schalteinrichtung 255 zum Erkennen des Einklemmens oder Mitschleifens des Fremdkörpers gering zu halten. Ziel ist es, dass der Fremdkörper, beispielsweise ein Kleidungsstück, von einer Seite, im Bereich 645, beispielsweise von der Fahrzeug-Innenseite, geklemmt wird. Wenn dann von der Fahrzeug-Innenseite an dem Fremdkörper gezogen wird, erfolgt die Schaltbewegung des Stößels 210 nicht oder bei sehr hoher Kraft. Die Schutzvorrichtung 120 und der Gegenkörper 125 sind dabei so ausgeformt, dass die Kraft zum Bewirken der Schaltbewegung des Stößels 210 und damit zum Erkennen des Fremdkörpers an der Innenseite des Fahrzeugs und an der Außenseite des Fahrzeugs unterschiedlich groß sein kann, an der Außenseite beispielsweise 150 Newton, um an einer sicherheitskritischen Seite für das Mitschleifen des Fremdkörpers, beispielsweise die Außenseite das Erkennen des Fremdkörpers schneller auszulösen.

Der Gegenkörper 125 und die Schutzvorrichtung 120 weisen hier beispielhaft je eine Breite 650 von etwa 32 Millimetern und eine gemeinsame Länge 655 von etwas 44 Millimetern (nominal 40 Millimeter +/- 2,5 Millimeter) auf.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Fahrzeug
- 105: Türvorrichtung
- 107: Tür
- 110: Türflügel
- 115: weiterer Türflügel
- 120: Schutzvorrichtung
- 125: Gegenkörper

- 205: Grundkörper
- 210: Stößel
- 215: Aufhängung
- 220: Dichtungsseite
- 225: Befestigungsseite
- 230: erster Außenabschnitt
- 235: zweiter Außenabschnitt
- 240: erster Steg
- 245: zweiter Steg
- 250: Hohlraum
- 255: Schalteinrichtung
- 260: erstes Schaltelement
- 265: zweites Schaltelement
- 270: Dichtungsabschnitt
- 275: Dichtelement
- 280: Prallelement

- 305: eingeklemmter Fremdkörper

- 505: Krafteinwirkung
- 510: Ausweichbewegung
- 515: von außen einwirkender Fremdkörper
- 605: Gegenkörper-Befestigungsseite
- 610: Gegenkörper-Dichtungsseite
- 615: erster Gegenkörper-Außenabschnitt
- 620: zweiter Gegenkörper-Außenabschnitt
- 625: Eindringschutzabschnitt
- 630: Gegenkörper- Prallelement
- 635: Dichtlippe
- 640: erster Abstand
- 645: zweiter Abstand
- 650: Breite
- 655: Länge

## Patentansprüche

1. Schutzvorrichtung (120) für einen Türflügel (110) für ein Fahrzeug (100), wobei die Schutzvorrichtung (120) folgende Merkmale aufweist:
einen Grundkörper (205), der eine Befestigungsseite (225) zum Befestigen des Grundkörpers (205) an dem Türflügel (110) und eine der Befestigungsseite (225) gegenüberliegende Dichtungsseite (220) aufweist, und einen ersten Außenabschnitt (230) und einen zweiten Außenabschnitt (235) umfasst, wobei sich der erste Außenabschnitt (230) und der zweite Außenabschnitt (235) zwischen der Dichtungsseite (220) und der Befestigungsseite (225) erstrecken;
einen Stößel (210), der an der Dichtungsseite (220) angeordnet ist;
eine Schalteinrichtung (255), wobei die Schalteinrichtung (255) ein mit dem Stößel (210) verbundenes erstes Schaltelement (260) und ein mit dem Grundkörper (205) verbundenes zweites Schaltelement (265) aufweist, wobei das erste Schaltelement (260) und das zweite Schaltelement (265) durch eine Schaltbewegung kontaktieren; und
eine Aufhängung (215), die den Stößel (210) beweglich mit dem Grundkörper (205) verbindet, wobei
die Aufhängung (215) einen ersten Steg (240) aufweist, der dazu ausgeformt ist, den Stößel (210) mit dem ersten Außenabschnitt (230) zu verbinden, und die Aufhängung (215) einen zweiten Steg (245) aufweist, der dazu ausgeformt ist, den Stößel (210) mit dem zweiten Außenabschnitt (235) zu verbinden,
die Aufhängung (215) ausgeformt ist, ansprechend auf eine auf ein freies Ende des Stößels (210) einwirkende Fremdkraft die Schaltbewegung des Stößels (210) in Richtung der Befestigungsseite (225) zu bewirken,
**dadurch gekennzeichnet, dass**
die Aufhängung (215) ausgeformt ist, eine durch eine Krafteinwirkung (505) auf eine Außenseite des ersten Außenabschnitts (230) bewirkte Druckkraft in eine in Erstreckungsrichtung des Stößels (210) wirkende Bewegungskraft umzulenken, um eine Ausweichbewegung (510) des Stößels (210) weg von der Befestigungsseite (225) zu bewirken.

2. Schutzvorrichtung (120) gemäß Anspruch 1, wobei der erste Außenabschnitt (230) und die Aufhängung (215) ansprechend auf die Krafteinwirkung (505) verformbar sind, wobei der erste Außenabschnitt (230) in Richtung des zweiten Außenabschnitt (235) bewegt und die Aufhängung (215) gestaucht wird, um die Ausweichbewegung (510) des Stößels (210) zu bewirken.

3. Schutzvorrichtung (120) gemäß einem der vorangegangenen Ansprüche, wobei der erste Steg (240) und/oder der zweite Steg (245) eine Krümmung aufweisen, wobei ein mit dem Stößel (210) verbundenes Ende des ersten Stegs (240) und/oder des zweiten Stegs (245) weiter von der Befestigungsseite (225) entfernt ist als ein mit dem Grundkörper (205) verbundenes Ende.

4. Schutzvorrichtung (120) gemäß einem der vorangegangenen Ansprüche, wobei in dem Grundkörper (205) ein Hohlraum (250) ausgeformt ist, der von dem Stößel (210) und der Aufhängung (215) überspannt wird, wobei ein Abstand zwischen dem Stößel (210) und einer dem Stößel (210) gegenüberliegenden Rückwand des Hohlraums (250) durch die Ausweichbewegung (510) vergrößert wird.

5. Schutzvorrichtung (120) gemäß einem der vorangegangenen Ansprüche, wobei der Grundkörper (205) zumindest einen Dichtungsabschnitt (270) zum Abdichten des Türflügels (110) aufweist, der an der Dichtungsseite (220) als Fortsatz des ersten Außenabschnitts (230) oder des zweiten Außenabschnitts (235) ausgeformt ist.

6. Schutzvorrichtung (120) gemäß Anspruch 5, wobei der Dichtungsabschnitt (270) als ein hohles und stauchbares Dichtelement (275) oder als ein massives Prallelement mit einer Dichtfläche (280) ausgeformt ist.

7. Türvorrichtung (105) für ein Fahrzeug (100), wobei die Türvorrichtung (105) einen Türflügel (110) und eine mit einer Schließkante des Türflügels (110) verbundene Schutzvorrichtung (120) gemäß einem der vorangegangenen Ansprüche aufweist.

8. Türvorrichtung (105) gemäß Anspruch 7, wobei die Türvorrichtung (105) einen weiteren Türflügel (115) und einen mit einer Schließkante des weiteren Türflügels (115) verbundenen Gegenkörper (125) in Form einer weiteren Schutzvorrichtung (120) gemäß einem der Ansprüche 1 bis 10 aufweist.

9. Türvorrichtung (105) gemäß Anspruch 8, wobei die Türvorrichtung (105) einen weiteren Türflügel (115) und einen mit einer Schließkante des weiteren Türflügels (115) verbundenen Gegenkörper (125) aufweist, der eine Gegenkörper-Dichtungsseite (610), die der Schutzvorrichtung (120) zugewandt ist, und eine Gegenkörper-Befestigungsseite (605) zum Befestigen des Gegenkörpers (125) an dem weiteren Türfügel (115) aufweist, und einen ersten Gegenkörper-Außenabschnitt (615) und einen zweiten Gegenkörper-Außenabschnitt (620) umfasst, wobei sich der erste Gegenkörper-Außenabschnitt (615) und der zweite Gegenkörper-Außenabschnitt (620) zwischen der Gegenkörper-Dichtungsseite (610) und der Gegenkörper-Befestigungsseite (605) erstrecken, wobei zwischen dem ersten Gegenkörper-Außenabschnitt (615) und dem zweiten Gegenkörper-Außenabschnitt (620) ein Eindringschutzabschnitt (625) angeordnet ist, der dazu ausgeformt ist, einen Zwischenraum zwischen dem Stößel (210) und dem zweiten Außenabschnitt der Schutzvorrichtung (120) teilweise auszufüllen.

10. Türvorrichtung (105) gemäß Anspruch 9, wobei im geschlossenen Zustand der Türvorrichtung (105) ein erster Abstand (640) zwischen dem ersten Außenabschnitt (230) und dem ersten Gegenkörper-Außenabschnitt (615) größer ist als ein zweiter Abstand (645) zwischen dem zweiten Außenabschnitt (235) und dem zweiten Gegenkörper-Außenabschnitt (620).

## Claims

1. A protection device (120) for a door leaf (110) for a vehicle (100), the protection device (120) having the following features:
a main body (205) that has a fastening side (225) for fastening the main body (205) to the door leaf (110) and a sealing side (220) opposite the fastening side (225) and comprises a first outer portion (230) and a second outer portion (235), the first outer portion (230) and the second outer portion (235) extending between the sealing side (220) and the fastening side (225);
a plunger (210) that is arranged on the sealing side (220);
a switching device (255), the switching device (255) having a first switching element (260) that is connected to the plunger (210) and a second switching element (265) that is connected to the main body (205), the first switching element (260) and the second switching element (265) making contact as a result of a switching movement; and
a suspension bracket (215) that movably connects the plunger (210) to the main body (205), the suspension bracket (215) having a first web (240) that is designed to connect the plunger (210) to the first outer portion (230), the suspension bracket (215) having a second web (245) that is designed to connect the plunger (210) to the second outer portion (235), and the suspension bracket (215) being designed to effect the switching movement of the plunger (210) in the direction of the fastening side (225) in response to an
external force acting on a free end of the plunger (210),
**characterised in that**
the suspension bracket (215) is designed to deflect a compressive force created by the application of force (505) on the outer side of the first outer portion (230) into a movement force acting in a direction of extension of the plunger (210) in order to cause an evasive movement (510) of the plunger (210) away from the fastening side (225).

2. A protection device (120) according to claim 1, the first outer portion (230) and the suspension bracket (215) being deformable in response to the application of force (505), the first outer portion (230) moving in the direction of the second outer portion (235) and the suspension bracket (215) being compressed in order to cause the evasive movement (510) of the plunger (210).

3. A protection device (120) according to either of the preceding claims, the first web (240) and/or the second web (245) having a curvature, an end of the first web (240) and/or of the second web (245) that is connected to the plunger (210) being further from the fastening side (225) than an end connected to the main body (205).

4. A protection device (120) according to any one of the preceding claims, there being formed in the main body (205) a cavity (250) that is spanned by the plunger (210) and the suspension bracket (215), a distance between the plunger (210) and a rear wall of the cavity (250) opposite the plunger (210) being enlarged by the evasive movement.

5. A protection device (120) according to any one of the preceding claims, the main body (205) having at least one sealing portion (270) for sealing the door leaf (110) that is formed on the sealing side (220) as a continuation of the first outer portion (230) or the second outer portion (235).

6. A protection device (120) according to claim 5, the sealing portion (270) being formed as a hollow and compressible sealing element (275) or as a solid impact element having a sealing face (280).

7. A door device (105) for a vehicle (100), the door device (105) having a door leaf (110) and a protection device (120) according to any one of the preceding claims that is connected to a closing edge of the door leaf (110).

8. A door device (105) according to claim 7, the door device (105) having a further door leaf (115) and a counterpart (125) in the form of a further protection device (120) according to any one of claims 1 to 10 that is connected to a closing edge of the further door leaf (115).

9. A door device (105) according to claim 8, the door device (105) having a further door leaf (115) and a counterpart (125) that is connected to a closing edge of the further door leaf (115), having a counterpart sealing side (610) that faces the protective device (115) and a counterpart fastening side (605) for fastening the counterpart (125) to the further door leaf (115), and comprising a first counterpart outer portion (615) and a second counterpart exterior portion (620), the first counterpart exterior portion (615) and the second counterpart exterior portion (620) extending between the counterpart sealing side (610) and the counterpart fastening side (605), there being arranged between the first counterpart outer portion (615) and the second counterpart outer portion (620) a penetration protection portion (625) that is formed to partially fill a space between the plunger (210) and the second outer portion of the protection device (120).

10. A door device (105) according to claim 9, when the door device (105) is closed a first distance (640) between the first outer portion (230) and the first counterpart outer portion (615) being greater than a second distance (645) between the second outer portion (235) and the second counterpart outer portion (620).

## Revendications

1. Dispositif (120) de protection d'un ventail (110) de porte d'un véhicule (100), dans lequel le dispositif (120) de protection a les caractéristiques suivantes :
un corps (205) de base, qui a un côté (225) de fixation pour la fixation du corps (205) de base au ventail (110) de la porte et un côté (220) d'étanchéité opposé au côté (225) de fixation, et comprend une première partie (230) extérieure et une deuxième partie (235) extérieure, dans lequel la première partie (230) extérieure et la deuxième partie (235) extérieure s'étendent entre le côté (220) d'étanchéité et le côté (225) de fixation ;
un coulisseau (210), qui est disposé du côté (220) d'étanchéité ; un dispositif (255) de commutation, dans lequel le dispositif (255) de commutation a un premier élément (260) de commutation relié au coulisseau (210) et un deuxième élément (265) de commutation relié au corps (205) de base, dans lequel le premier élément (260) de commutation et le deuxième élément (265) de commutation sont mis en contact par un mouvement de commutation ; et
une suspension (215), qui relie le coulisseau (210) à déplacement au corps (205) de base,
dans lequel
la suspension (215) a une première entretoise (240), qui est conformée pour relier le coulisseau (210) à la première partie (230) extérieure, et la suspension (215) a une deuxième entretoise (245), qui est conformée pour relier le coulisseau (210) à la deuxième partie (235) extérieure,
la suspension (215) est conformée pour, en réaction à une force étrangère s'appliquant à une extrémité libre du coulisseau (210), provoquer le déplacement de commutation du coulisseau (210) en direction du côté (225) de fixation,
**caractérisé en ce que**
la suspension (215) est conformée pour transformer une force de poussée, provoquée par l'effet (505) d'une force sur une face extérieure de la première partie (230) extérieure, en une force de déplacement s'appliquant dans une direction, dans laquelle s'étend le coulisseau (210), afin de provoquer un mouvement (510) d'écartement du coulisseau (210) du côté (225) de fixation.

2. Dispositif (120) de protection suivant la revendication 1, dans lequel la première partie (230) extérieure et la suspension (215) sont déformables en réaction à l'effet (505) d'une force, dans lequel la première partie (230) extérieure se déplace dans la direction de la deuxième partie (235) extérieure et la suspension (215) est comprimée pour provoquer le mouvement (510) d'écartement du coulisseau (210).

3. Dispositif (120) de protection suivant l'une des revendications précédentes, dans lequel la première entretoise (240) et/ou la deuxième entretoise (245) ont une courbure, dans lequel une extrémité, reliée au coulisseau (210), de la première entretoise (240) et/ou de la deuxième entretoise (245) est plus éloignée du côté (225) de fixation qu'une extrémité reliée au corps (205) de base.

4. Dispositif (120) de protection suivant l'une des revendications précédentes, dans lequel, dans le corps (205) de base est formée une cavité (250), qui est recouverte par le coulisseau (210) et par la suspension (215), dans lequel une distance entre le coulisseau (210) et une paroi arrière, opposée au coulisseau (210), de la cavité (250) est agrandie par le mouvement (510) d'écartement.

5. Dispositif (120) de protection suivant l'une des revendications précédentes, dans lequel le corps (205) de base a au moins une partie (270) d'étanchéité pour rendre étanche le ventail (110) de la porte, qui est formée du côté (220) d'étanchéité comme prolongement de la première partie (230) extérieure ou de la deuxième partie (235) extérieure.

6. Dispositif (120) de protection suivant la revendication 5, dans lequel la partie (270) d'étanchéité est sous la forme d'un élément (275) d'étanchéité creux et comprimable ou sous la forme d'un élément de rebondissement plein ayant une surface (280) d'étanchéité.

7. Dispositif (105) de porte d'un véhicule (100), dans lequel le dispositif (105) de porte a un ventail (110) de porte et un dispositif (120) de protection suivant l'une des revendications précédentes relié à un bord de fermeture du ventail (110) de la porte.

8. Dispositif (105) de porte suivant la revendication 7, dans lequel le dispositif (105) de porte a un autre ventail (115) de porte et un corps (125) antagoniste relié à un bord de fermeture de l'autre ventail (115) de la porte sous la forme d'un autre dispositif (120) de protection suivant l'une des revendications 1 à 10.

9. Dispositif (105) de porte suivant la revendication 8, dans lequel le dispositif (105) de porte a un autre ventail (115) de porte et un corps (125) antagoniste relié à un bord de fermeture de l'autre ventail (115) de la porte, qui a un côté (610) d'étanchéité de corps antagoniste, qui est tourné vers le dispositif (120) de protection, et un dispositif (605) de fixation de corps antagoniste pour la fixation du corps (125) antagoniste à l'autre ventail (115) de la porte, et comprend une première partie (615) extérieure de corps antagoniste et une deuxième partie (620) extérieure de corps antagoniste, dans lequel la première partie (615) de corps antagoniste et la deuxième partie (620) de corps antagoniste s'étendent entre le côté (610) d'étanchéité de corps antagoniste et le côté (605) de fixation de corps antagoniste, dans lequel, entre la première partie (615) extérieure de corps antagoniste et la deuxième partie (620) extérieure de corps antagoniste, est disposée une partie (625) de protection vis-à-vis de l'irruption, qui est conformée de manière à remplir en partie un espace intermédiaire entre le coulisseau (210) et la deuxième partie extérieure du dispositif (120) de protection.

10. Dispositif (105) de porte suivant la revendication 9, dans lequel, dans l'état fermé du dispositif (105) de porte, une première distance (640) entre la première partie (230) extérieure et la première partie (615) extérieure de corps antagoniste est plus grande qu'une deuxième distance (645) entre la deuxième partie (235) extérieure et la deuxième partie (620) extérieure de corps antagoniste.
